# EUROPEAN PATENT APPLICATION

(11) **EP 3 771 690 A1**
(43) Date of publication of application: **03.02.2021**
(21) Application number: 20189069.6
(22) Date of filing: 01.08.2020
(51) Int. Cl.: C02F 1/04, B01D 61/44, C02F 1/42, C02F 1/469, C02F 9/00, C22B 26/10, C02F 1/46

(54) **PROCEDURE FOR THE EXTRACTION OF MINERALS FROM SEA WATER, PLANT FOR EXTRACTION AND MINERALS OBTAINED THROUGH THE EXTRACTION PROCEDURE**

(30) Priority: 02.08.2019 IT 201900013884
(71) Applicant: ResourSEAs S.r.l., 90128 Palermo (IT)
(72) Inventor: CIPOLLINA Andrea, 90138 Palermo (IT); BEVACQUA, Maurizio, 41124 Modena (IT); MICALE, Giorgio, 90143 Palermo (IT); PAPAPETROU, Michael, Dublin, A94D2X3 (IE); TAMBURINI, Alessandro, 90014 Casteldaccia (PA) (IT)
(74) Representative: De Tullio, Michele Elio

(57) **Abstract**

The present invention discloses a procedure for extracting minerals from the waste brine of saltern plants , where said brine is also called "bittern", wherein said bittern comprises a quantity of sodium ions Na⁺ ranging from about 18 to about 78 g/l, a quantity of potassium ions K+ ranging from about 3 to about 17 g/l, a quantity of magnesium ions Mg²⁺ ranging from about 10 to about 60 g/l, a quantity of chlorine ions Cl⁻ ranging from about 178 to about 292 g/l, a quantity of sulphate ions SO4⁻ ranging from about 43 to about 114 g/l, a concentration of calcium ions Ca²⁺ less than 1 g/l, a concentration in trace elements ranging from 10⁻⁶ to 1 g/l, and is substantially inorganic carbon free, wherein said procedure comprises the following steps:
a) obtaining said bittern from a saltern by way of a fractioned evaporation and crystallization of calcium and chlorine salts, such as for example sodium chloride;
b) sending said bittern to a first reactive crystallizer for magnesium hydroxide;
c) extracting magnesium hydroxide from said bittern by way of a reactive crystallization, wherein the reagent is alkaline solution of alkaline hydroxides, such as, for example, NaOH and KOH or mixtures thereof, and obtaining a magnesium-free waste brine;
d) sending the magnesium-free waste brine to a trace element separation unit;
e) separating a solution from the magnesium-free waste brine comprising at least one of the trace elements included in the group formed of alkaline, alkaline-earthy, transition, and post-transition metals, at a concentration ranging from 10⁻⁴ to 100 g/l, so as to obtain a waste brine deprived of one or several trace elements;
f) sending the solution to a second reactive crystallizer;
g) extracting at least one of the trace elements of a group including alkaline, alkaline-earthy, transition, and post-transition metals from the solution by way of a reactive crystallization, wherein the reagent is an acidic solution, formed of a mixture of HCI and H₂SO₄, and/or an alkaline solution, formed of a mixture of NaOH and KOH;
h) sending the waste brine deprived of one or several trace elements to an electrodialysis with bipolar membranes unit;
i) submitting the waste brine deprived of one or several trace elements to electrodialysis with bipolar membranes, so as to convert a part of the sodium, potassium, and chloride ions and the water of the solution into hydrochloric acid (HCI), sulphuric acid (H₂SO₄), and sodium/potassium hydroxides (NaOH/KOH) in solution, thus obtaining acidic solutions, alkaline solutions, and a salt-concentrated waste brine;
j) diluting said salt-concentrated waste brine for obtaining a diluted waste brine and recycling it in the saltern or in the sea,
wherein the electrical energy necessary for implementing steps b) thru j) of the procedure is generated starting from said waste brines jointly with and/or alternatively to the electrical energy produced by at least one renewable energy source ,
wherein said procedure for extracting minerals from said bittern is closed cycle one, wherein the waste product of each individual step of the procedure feeds another step of the procedure itself, and wherein the final waste product of the procedure is re-used in the saltern itself or in the sea.

The present invention also describes a plant for extracting minerals from a bittern that uses the above-described procedure.

## Description

The present invention relates to procedures and plants for extracting elements, nutrients from natural sources and elements.

More specifically, the present invention refers to a procedure and to a plant for extracting magnesium and trace elements from the bittern, i.e. a specific exhausted brine coming from processing the sea water in a saltern.

Trace elements are elements present in the bittern in very low concentrations, and generally they comprise alkali, alkali-earthy or transitional or post-transitional metals.

### Present state of the art

Different procedures are known in the present state of the art for extracting chemical elements from the sea water, in particular procedures associated to seawater desalination.

Patent document WO2006031732 discloses a seawater treatment process for desalinating and recovering salts and minerals contained therein. This process uses a device for removing cations and a device for removing anions. These devices are suitable for electrodialysis. Also, these devices comprise membranes for separation. The process comprises the use of a calcium sulphate precipitating chamber, a sodium sulphate crystallization chamber, a metal crystallization chamber for crystallizing metals in the form of salts, a crystallizing chamber for crystallizing a cation in the form of a salt. The process is capable of purifying water from low-solubility salts having the formula MY and from soluble salts having the formula NX. The cation N can comprise a lithium, sodium, potassium, cesium, rubidium, ammonium and an ammine or the like. The anion X can comprise chloride, bromide, iodide, nitrate or an organic ion. The species MY can be calcium sulphate.

Patent document EP2149625 discloses an integrated process for producing fresh water, sodium, magnesium, calcium, potassium, caustic soda, chlorine, hydrochloric acid, sulphuric acid, hydrogen, oxygen or the like by using seawater. The energy necessary for this integrated process comes from renewable sources, such as, for instance, wind, sun, tide movement. The process also comprises production of ethanol and supply of raw materials and energy for aquaculture and cultivation of vegetables. Also, the process disclosed in EP2149625 specifies that calcium is present in the start solution, which is removed through the addition of oxalates. Magnesium and the remaining compounds extracted from this start solution are metals in the metallic state.

Patent document WO2013052248 discloses a system and a process for desalinating water that uses reverse osmosis. The document also discloses the use of electrodialysis devices and, in particular, a reverse electrodialysis (RED) unit. According to this process, wastewater streams are obtained featuring a salinity that exceeds the salinity of the feed water by not more than 10%.

Patent document WO 17205072 discloses a process and a plant for extracting minerals starting from a brine that contains calcium and inorganic carbon. In this document, it is also stated that this process is capable of producing just hydrochloric acid (HCI) as an acid and just sodium hydroxide (NaOH) as a base.

No use of exhausted brines from saltern (bittern) instead of seawater can be inferred from the present state of the art, in particular for extracting magnesium; the use of a bittern, in which carbonates and calcium salts are precipitated makes it possible, first of all, to extract magnesium with high purity.

No use of electrical energy produced from the salinity gradient of the waste brine is inferred either from the present state of the art nor a total absence of waste products from the procedure.

Additionally, in the identified prior art documents no extraction of those minerals and mineral salts which are not mentioned in the processes disclosed is inferred from the present state of the art.

From analyzing the present state of the art, a need can be identified for providing a closed process for extracting minerals (magnesium and trace elements), or classes of minerals, from the exhausted brine of a saltern that features reduced costs and low environmental impact.

### Summary of the invention

The present invention describes a procedure and a plant for extracting minerals from a bittern.

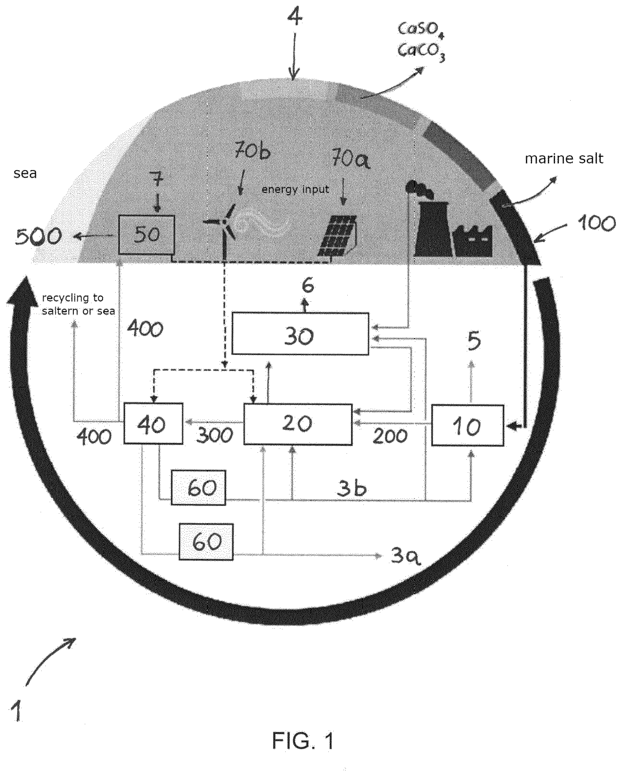

The seawater, by feeding a traditional saltern, takes advantage of sun and wind effects to make water evaporate and calcium salts, carbonates, and sodium chloride precipitate (FIG. 1), thus producing a bittern.

Specifically, the procedure according to this invention is operating in a closed cycle using bittern, wherein the waste product of each individual step of the procedure (waste brines) and of each piece of equipment of the plant feeds another step of the procedure or another apparatus; the residual waste product of this procedure is re-used in the saltern itself or in the sea.

Additionally, the procedure according to this invention also includes an electrical energy production step starting from the waste brine in order to feed the most energy consuming steps of the procedure itself; the electrical energy necessary for the procedure also comes from the renewable sources making part of the plant.

Also, the procedure according to this invention does not require external supply of reagents, in that it produces acid or alkaline solutions which operate as reagents for the operating steps of the procedure itself, always starting from waste brine.

The procedure according to this invention is an integrated process, wherein different processes and apparatuses are integrated with each other to form an innovative process for extracting minerals from a bittern, wherein the exhausted brines of a saltern are used for producing minerals other than sodium chloride.

Thus, the procedure disclosed in this invention offers the following advantages:
- using chemical reagents produced by waste brine and ready for being used in the individual production steps;
- using chemical reagents coming from local carbon dioxide sources (industrial chimneys), thus resulting in a positive environmental impact;
- using renewable energy sources only for feeding all steps of the procedure;
- using the waste brine of the process for producing electrical energy, as necessary for the most energy consuming steps of the procedure and for those instants in time when less energy comes from renewable sources;
- total absence of waste products, in that the procedure ends with a brine which, after being diluted, is re-poured in the sea or re-used in the saltern.

### Brief description of the figures

Other advantages, characteristics, and ways of use of the procedure and of the plant according to the present invention will be apparent from the following detailed description of one embodiment, which is presented for explanatory, non-limitative purposes only, with a special reference to the attached figures, wherein:
Figure 1 - a schematic view of a closed cycle plant for extracting minerals from the bittern of a saltern;
Figure 2 - a block diagram of the procedure for extracting minerals from a bittern;
Figure 3 - a detailed block diagram of that step of the procedure whereby electrical energy is produced starting from waste brine;
Figure 4 - a schematic view of the devices making up a plant for extracting minerals from a bittern.

### Key to symbols

- 1.: plant for extracting minerals from a bittern;
- 2.: solution rich in one or more trace elements;
- 3.: reagent:
3a. acidic solutions;
3b. alkaline solutions;
- 4.: exhausted brine production site;
4a. saltern;
4b. stock of natural origin brine;
- 5.: magnesium hydroxide;
- 6.: trace elements;
- 7.: low-salinity water stream;
- 8.: electrical energy;
8a: electrical energy coming from brine
8b: electrical energy coming from renewable energy sources
- 9.: carbon dioxide;
- 10.: reactive crystallizer for extracting magnesium hydroxide;
- 20.: trace element separation unit;
- 30.: reactive crystallizer for extracting trace elements;
- 40.: electrodialysis with bipolar membrane unit;
- 50.: reverse electrodialysis unit;
- 60.: storage tanks;
60a. input tank;
60b. output tank;
- 70.: renewable energy sources;
70a. wind energy source
70b. solar energy source
- 80.: connection means to hydraulic pipes;
- 90.: hydraulic pump means;
- 100.: saltern exhausted brine (bittern) deprived of calcium salts;
- 200.: magnesium-free waste brine;
- 300.: waste brine deprived of one or more trace elements;
- 400.: salt-concentrated waste brine;
- 500.: waste brine.

### Detailed description of the invention

The present invention discloses in particular the following procedure for extracting magnesium hydroxide and trace elements from a saltern bittern 4a.

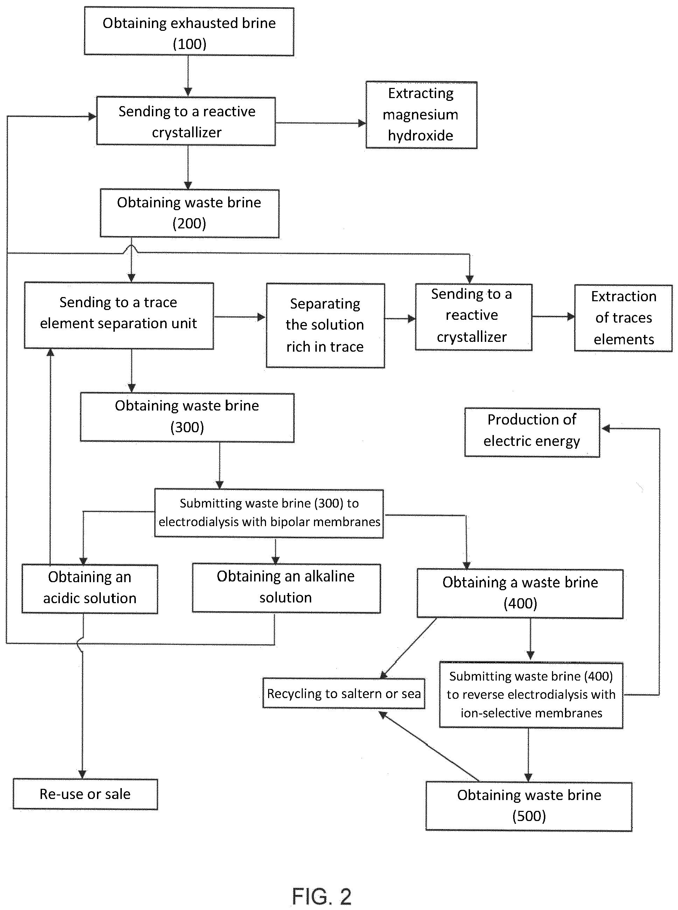

In particular, the invention discloses a closed cycle procedure, whose operating steps are listed below (FIG. 2):
a) obtaining a bittern 100 from a saltern, wherein said bittern comprises a quantity of sodium ions Na⁺ ranging from about 18 to about 78 g/l, a quantity of potassium ions K+ ranging from about 3 to about 17 g/l, a quantity of magnesium ions Mg²⁺ ranging from about 10 to about 60 g/l, a quantity of chlorine ions Cl⁻ ranging from about 178 to about 292 g/l, a quantity of sulphate ions SO₄⁻ ranging from about 43 to about 114 g/l, a concentration of calcium ions Ca²⁺ less than 1 g/l, a concentration of trace elements ranging from 10⁻⁶ to 1 g/l, and which is substantially deprived of inorganic carbon and calcium salts (calcium sulphates and carbonates);
b) sending the saltern exhausted brine 100 to a first reactive crystallizer 10 for magnesium hydroxide;
c) extracting magnesium hydroxide from the saltern exhausted brine 100 by way of a reactive crystallization, wherein the reagent is alkaline solution of alkaline hydroxide (3b), such as, for example, NaOH and KOH or mixture thereof, and obtaining a magnesium-free waste brine 200;
d) sending the magnesium-free waste brine 200 to a trace element separation unit 20;
e) separating a solution 2 from the magnesium-free waste brine 200 comprising at least one of the trace elements included in the group formed of alkaline, alkaline-earthy, transition, post-transition metals, at a concentration ranging from 10⁻⁴ to 100 g/l, so as to obtain a waste brine 300 deprived of one or several trace elements;
f) sending the solution 2 to a second reactive crystallizer 30 for trace elements;
g) extracting at least one of the trace elements of a group including alkaline, alkaline-earthy, transition, post-transition metals from the solution 2 by way of a reactive crystallization, wherein the reagent 3 is an acidic solutions, formed of a mixture of HCI and H₂SO₄, and/or alkaline solution, formed of a mixture of NaOH and KOH, and/or carbon dioxide 9;
h) sending the waste brine 300 deprived of one or several trace elements to one electrodialysis with bipolar membranes unit 40;
i) submitting the waste brine 300 deprived of one or several trace elements to electrodialysis with bipolar membranes, so as to convert a part of the sodium, potassium, and chloride ions and the water of the solution into hydrochloric acid (HCI), sulphuric acid (H₂SO₄), and sodium/potassium hydroxides (NaOH/KOH) in solution, thus obtaining acidic solutions 3a, alkaline solutions 3b, and a salt-concentrated waste brine 400;
j) diluting said salt-concentrated waste brine 400 for obtaining a diluted waste brine 500 and recycling it in the saltern 4a or in the sea.

In this closed cycle, the waste product (100, 200, 300) of every operating step of the procedure is re-used within the procedure itself, and the final waste product (400, 500) of the procedure is re-used in the saltern itself (4a) or in the sea.

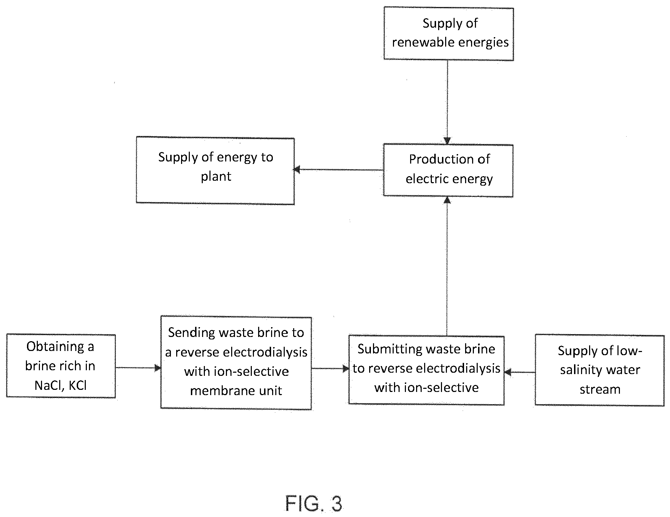

The procedure is also characterized in that the electrical energy necessary for implementing operating steps b) thru j) of the procedure is generated from said waste brines 100, 200, 300, 400; said production of electrical energy from brine takes place jointly with and/or alternatively to the electrical energy produced by at least one renewable energy source 70 (FIG. 3).

The procedure according to the invention is preceded by a step a) wherein the sea water feeds a traditional saltern wherein calcium sulphates and carbonates and subsequently sodium chloride precipitate, thus generating a saltern exhausted brine 100, which is also referred to as bittern. This exhausted brine 100 is poor in calcium ions and rich in magnesium and trace elements: this starting condition of the bittern is fundamental for the purpose of extracting high-purity magnesium and trace elements (FIG. 1).

In one further embodiment of the invention, a desalination unit is interposed between the sea and the saltern, so as to also generate desalinated water for civil and/or industrial uses and to obtain a more concentrated brine from the seawater, which is used to feed the traditional saltern, thus increasing its productivity by 20-30 %.

The exhausted brine 100 is sent to a reactive crystallizer 10 for magnesium hydroxide wherein the magnesium dissolved therein is separated in the form of magnesium hydroxide by precipitation; thanks to this procedure it is possible to recover at least 99 % of the dissolved magnesium from the exhausted brine. This step c) uses a solution of mixed alkaline hydroxides (sodium hydroxide, potassium hydroxide, and others) which is generated during step i) of the procedure, as a reagent.

The waste product in step c) is the magnesium-free residual brine 200 which feeds the subsequent step or step e) after being sent to a trace element separation unit 20.

The magnesium-free brine 200 is rich in trace elements, i.e. alkaline, alkaline-earthy, transition, and post-transition metals; the trace element separation unit 20 is based on the use of highly selective membranes which allow to separate one element from the others, or one group of elements from the others, by thus generating a solution 2 rich in one or several trace elements and obtaining a waste brine 300, deprived of one or several trace elements, as a residual product.

Said step e) is a step that requires a major use of electrical energy, it is one of the most energy consuming steps of the procedure and requires both electrical energy produced by the waste brine and electrical energy produced by renewable sources.

As a matter of fact, the energy necessary for said steps b) thru j) is generated by at least one renewable energy source 70 jointly with and/or alternatively to the electrical energy produced by the waste brine 400.

Said solution 2 rich in trace elements recovered from the magnesium-free exhausted brine 200 is sent to a reactive crystallizer 30, wherein the reagents will be acidic solutions, consisting of a mixture of HCI and H₂SO₄, and/or alkaline solutions, consisting of a mixture of NaOH and KOH; in the specific case of the precipitation of carbonates of a separate element, as with Li₂CO₃, the reaction will also use carbon dioxide 9 as a reagent, having recovered it from the waste fume streams of industrial activities nearby.

The residual brine 300 used in step e), deprived of one or several trace elements and still very rich in soluble salts such as sodium chloride or potassium chloride, feeds the following electrodialysis with bipolar membranes (EDBM), step i).

In this unit, the generation of an external electrical field (given by the application of an electrical potential difference) in a cell consisting of cationic, anionic, and bipolar selective membranes (i.e. formed of one cationic layer and one anionic layer) makes it possible to "electrochemically" convert a part of the sodium, potassium, and chloride ions and the water of the solution into hydrochloric acid and sodium/potassium hydroxides in solution, thus generating an acidic solution, an alkaline solution, and a waste brine with residual dissolved salts. In a fully innovative manner, this step of the procedure uses the electrical energy necessary for transforming such salts contained in the waste brine 300 deprived of one or several trace elements into acids and bases in an aqueous solution which represent the reagents that will be used internally to the procedure itself; this step produces a salt-concentrated waste brine 400 as a end product.

The acidic solutions 3a and/or alkaline solutions 3b produced in step i) of the procedure are the reagents used in step c), e), and/or step g).

Step i), whereby reagents are produced in-situ, makes it possible to achieve the following advantages:
- obtaining acid and alkaline solutions that are ready for use, thus reducing the risks associated with handling, dissolving, and diluting pure reagents;
- reducing the costs associated with purchase of reagents and preparation of solutions;
- producing a stream of acid in excess of what is required which can be marketed;
- using step i) as an energy buffer, by making it operating it when there is an energy surplus, so as to make it possible to reduce its operation when energy production is lower, by storing the brine 300 at the input and the acidic and/or alkaline solutions at the output in appropriate storage tanks.

In step g), said reagents jointly comprise carbon dioxide 9 deriving from industrial fumes for carbonate precipitation; the carbon dioxide used might also be a synthetic one.

If carbon dioxide 9 deriving from industrial chimneys or from combustion units is used, this step features an important positive environmental impact related to the capture of CO₂, before its release into the atmosphere.

In a further embodiment of this invention, this step, which comprises the production of acidic and/or alkaline solutions, might be supplemented with the possibility of storing said acidic and alkaline solutions (in periods of stop of the production cycle, if any) and subsequently producing electrical energy by way of a reverse electrodialysis with bipolar membranes.

This step whereby reagents are produced starting from a waste brine, or EDBM step, might also be applied to other processes capable of transforming salt into acids and bases (for example, electrochemical cells).

In one further embodiment of the procedure according to the invention, the waste brine 300 deprived of one or several trace elements, which is the waste product of the selective trace element separation unit that uses highly selective membranes (ion exchange membranes), is sent to a trace element selective separation unit, the operation of which is based on the use of a highly selective absorbing material, which allows to separate one element from the others, or one group of elements from the others, by generating a solution rich in at least one trace element, which is sent to a reactive crystallizer; the adsorbing material requires separate trace elements regeneration and release cycles wherein the pH is the controlling variable.

The waste brine 400 produced downstream of the electrodialysis with bipolar membranes unit is still a salt-concentrated brine; this brine can be either re-cycled and subsequently re-used in the saltern or poured into the sea after being diluted, or might be used for producing energy.

In step j), or salt-concentrated waste brine 400 recycling step, said brine is first diluted and subsequently sent to the sea, depending on the admitted limits for discharging into the sea.

Downstream of the unit 40, in the case of a production of a brine very much concentrated in NaCl and KCI, the latter can be used for producing the electrical energy necessary for the production cycle.

The salt-concentrated waste brine 400 used for producing electrical energy shall have a salt concentration ranging from 40 g/l to 350 g/l.

Production of electrical energy from the salt-concentrated waste brine 400 (RED step) takes place after step i) and comprises the following further steps:
- sending the salt-concentrated waste brine 400 to a reverse electrodialysis with ion-selective membranes unit 50;
- submitting the salt-concentrated waste brine 400 to reverse electrodialysis with ion-selective membranes for producing electrical energy and for producing a diluted waste brine 500;
- sending said diluted waste brine 500 to the sea or to the saltern.

The salt-concentrated waste brine 400 will be suitable for producing energy in reverse electrodialysis devices, in which the salinity gradient between the highly concentrated brine and a low-salinity water stream 7 (for instance, river water, salty well, effluent output from a waste water treatment plant) is converted into electrical energy 8 thanks to the use of special ion-selective membranes.

In a reverse electrodialysis (RED) device, two salty solutions are made flow through channels formed of alternating cationic and anionic selective membranes. The difference of salinity between the two channels (hence between the two faces of each membrane) generates a movement of the ions present in the solution from the highly concentrated channel to the diluted one. However, the presence of membranes that are selective to the passage of cations only or anions only orients the passage of the salt so that cations move in one direction and anions move in the other direction. Such "oriented" stream of ions makes up a current of electrical charges inside the cell formed of the channels and the membranes. At the end of such cell, two final compartments (called electrodic compartments) make it possible to convert the stream of ions in solution into a stream of electrons, which can finally flow in an external electrical circuit, thus producing electrical energy.

As previously said, the energy necessary for the implementation of the procedure according to this invention is generated by at least one renewable energy source 70, jointly with and/or alternatively to the electrical energy (8a) produced by the salt-concentrated waste brine 400 (RED step); said at least one renewable energy source is a wind energy source 70a and/or a solar energy source 70b.

The electrical energy 8 necessary for the production cycle is supplied both by the renewable sources and by the reverse electrodialysis unit and is produced according to variable and intermittent production cycles; in the case of the energy produced by renewable sources, variability relates to the availability of energy sources, i.e. wind and solar energy sources, which are not continuous during one day and in all days, because of the variable climatic conditions; concerning the energy produced by the reverse electrodialysis unit, variability relates to the availability, or not, of a very much concentrated waste brine.

The variability related to energy production is compensated for by using two strategies as follows:
- using the reverse electrodialysis unit for producing electrical energy in those hours in which the solar and wind sources do not meet the requested energy demand;
- modulating the energy request of the most energy consuming steps of the procedure, i.e. step e) and step i), by using exhausted brine storage tanks at the input or at the output, i.e. the brines used to feed either step.

Steps e) and i) use at least one input brine storage tank and at least one output brine storage tank, in order to store the brine 200 and 300 and implement said steps e) and i) whenever there is availability of electrical energy coming from renewable energy sources (8b) and/or coming from waste brine (8a).

The procedure according to the present invention makes it possible to extract minerals from the brine of a saltern or of a stock of natural origin brine.

In particular, the procedure according to the present invention makes it possible to extract, hence to recover at least 99 % of the magnesium, in the form of magnesium hydroxide 5, present in a bittern, in a fully innovative manner; the magnesium 5 thus extracted is characterized in having a high degree of purity (95 % to 99 % in magnesium). Besides magnesium, the procedure makes it possible to recover trace elements 6, which are first separated and concentrated in an extraction solution 2, then crystallized in a solid form as minerals.

Therefore, the minerals obtained by using the procedure according to the present invention are comprised in the group formed of: magnesium hydroxide and carbonates, bicarbonates or hydroxides/oxides of alkaline metals, carbonates, bicarbonates or hydroxides/oxides of alkaline-earthy metals, carbonates, bicarbonates or hydroxides/oxides of transition metals, carbonates, bicarbonates or hydroxides/oxides of post-transition metals; in particular, the minerals extracted are comprised in the group formed of lithium carbonates or hydroxides, cesium hydroxides or carbonates, strontium hydroxides or carbonates, rubidium hydroxides or carbonates, germanium hydroxides or carbonates, cobalt hydroxides or carbonates, and gallium hydroxides or carbonates.

Among trace elements, the main minerals extracted preferably comprise lithium, cesium, strontium, rubidium, germanium cobalt and gallium, in particular lithium carbonates. The integrated process according to the present invention represents an important potential for the implementation in hundreds of sites, in salterns used for producing salt from seawater present both in Europe and in the Mediterranean basin, as well as in other geographical areas of the world, on an industrial scale.

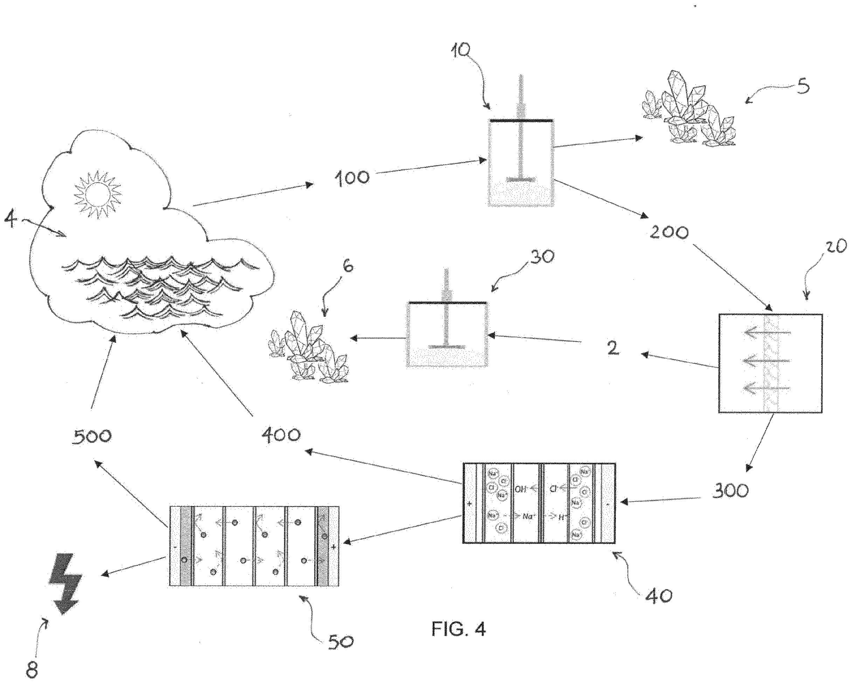

The present invention also discloses a plant for extracting minerals from exhausted brines of seawater coming from salterns, also called "bittern" 100, or other natural or anthropic origin brines which use the previous described procedure (FIG. 4).

Said plant 1 for extracting minerals from a waste brine 100 of saltern plants 4a, also called "bittern" (100), wherein said bittern comprises a quantity of sodium ions Na⁺ ranging from about 18 to about 78 g/l, a quantity of potassium ions K+ ranging from about 3 to about 17 g/l, a quantity of magnesium ions Mg²⁺ ranging from about 10 to about 60 g/l, a quantity of chlorine ions Cl⁻ ranging from about 178 to about 292 g/l, a quantity of sulphate ions SO₄⁻ ranging from about 43 to about 114 g/l, a concentration of calcium ions Ca²⁺ less than 1 g/l, a concentration in trace elements ranging from 10⁻⁶ to 1 g/l, and is substantially inorganic carbon free, a plant that uses the procedure according to claims 1 thru 10, and comprising the following components, is formed of the following elements:
- at least one reactive crystallizer 10 for extracting magnesium hydroxide 5 from said bittern 100, wherein the reagent is an alkaline solution of alkaline hydroxides, such as, for instance, NaOH and KOH or mixtures thereof, in order to obtain a magnesium-free waste brine 200;
- one or several trace element separation units 20 by way of highly selective membranes, highly selective adsorbing materials, for separating at least one solution 2 rich in one or several trace elements from the magnesium-free waste brine 200, and obtaining a waste brine 300 deprived of one or several trace elements, wherein the reagent is an acidic solution, consisting of a mixture of HCI and H₂SO₄, or an alkaline solution, consisting of a mixture of NaOH and KOH;

- at least one reactive crystallizer 30 for extracting trace elements 6 from said at least one solution 2;
- at least one electrodialysis with bipolar membranes unit 40 for producing reagents from the waste brine 300 deprived of one or several trace elements for obtaining a salt-concentrated waste brine 400 and acidic solutions 3a, consisting of a mixture of HCI and H₂SO₄, and alkaline solutions 3b, consisting of a mixture of NaOH and KOH;
- at least one reverse electrodialysis unit 50 for producing electrical energy (8a) from the salt-concentrated waste brine 400;
- at least one low-salinity water stream 7;
- two or several storage tanks for storing the waste brines 100, 200, 300, of which at least one input tank 60a and at least one output tank 60b for intermittently implementing the energy consuming steps of the process;
- at least one electrical energy production unit for producing electrical energy from renewable sources 70;
- connection means to connect hydraulic pipes 80 for transferring waste products from one component of the plant to another;
- hydraulic pump means 90 for pushing the waste brines 100, 200, 300 from one component of the plant to another, and/or for pushing the final waste brines 400, 500 into the sea or into the salterns plants (4a) of said bittern 100.

The plant 1 according the present invention is a closed cycle one, i.e. the waste product 100, 200, 300 of each individual component of the plant is re-used in another component internally to the plant itself, and the final waste products 400, 500, of the plant are re-used in the sea or in the saltern; also, the electrical energy that feeds the plant is produced from the brine 400 during the reverse electrodialysis with ion-selective membranes step and by the renewable sources 70 making part of the plant, and the reagents 3a, 3b, which operate in at least one reactive crystallizer 10, 30 and in one or several trace element separation units 20, are produced from the exhausted brine 300 deprived of one or several trace elements via an electrodialysis with bipolar membranes process.

In one preferred embodiment of the plant according to this invention, said exhausted brine 100 production site is a seawater saltern 4a.

In one further embodiment of the plant according to the invention, said exhausted brine 100 production site is a stock of natural origin brine 4b.

The process and the plant according to the invention represent an innovative and eco-sustainable use of the exhausted brines of a seawater saltern (bittern) for producing/extracting minerals contained therefrom. The plant and the procedure used feature a low environmental impact, very reasonable costs in that whatever is necessary for the procedure to operate (reagents and electrical energy) and to feed every step (the product used to feed each individual step is the waste product of the previous step) is produced internally to the plant itself, thus finally determining a total absence of waste products, thanks to the re-use of the final waste products.

The scope of the invention is susceptible of numerous modifications and variants, all falling within the inventive concept expressed in the attached claims.

All details can be replaced by other, technically equivalent elements, depending on the actual requirements, without departing from the scope of protection of the present invention.

Even though the invention has been described with a special reference to the attached figures, the reference numbers used in the description and in the claims are used for improving the understandability of the invention, but they do not constitute any limitation to the claimed scope of protection.

## Claims

1. A procedure for extracting minerals from a waste brine (100) of saltern plants (4a), wherein said brine (100) is also called "bittern" (100), wherein said bittern comprises a quantity of sodium ions Na⁺ ranging from about 18 to about 78 g/l, a quantity of potassium ions K+ ranging from about 3 to about 17 g/l, a quantity of magnesium ions Mg²⁺ ranging from about 10 to about 60 g/l, a quantity of chlorine ions Cl⁻ ranging from about 178 to about 292 g/l, a quantity of sulphate ions SO₄⁻ ranging from about 43 to about 114 g/l, a concentration of cation ions Ca²⁺ less than 1 g/l, a concentration in trace elements ranging from 10⁻⁶ to 1 g/l, and is substantially inorganic carbon free,
wherein said procedure comprises the following steps:
a) obtaining said bittern (100) from a saltern;
b) sending said bittern (100) to a first reactive crystallizer (10) for magnesium hydroxide;
c) extracting magnesium hydroxide from said bittern (100) by way of a reactive crystallization, wherein the reagent is an alkaline solution of alkaline hydroxides, such as, for example, NaOH and KOH or mixtures thereof, and obtaining a magnesium-free waste brine (200);
d) sending the magnesium-free waste brine (200) to a trace element separation unit (20);
e) separating a solution (2) from said magnesium-free waste brine (200) comprising at least one of the trace elements included in the group formed of alkaline, alkaline-earthy, transition, and post-transition metals, at a concentration ranging from 10⁻⁴ to 100 g/l, so as to obtain a waste brine (300) deprived of one or several trace elements;
f) sending the solution (2) to a second reactive crystallizer (30) for extracting trace elements;
g) extracting at least one of the trace elements of a group including alkaline, alkaline-earthy, transition, and post-transition metals from the solution (2) by way of a reactive crystallization, wherein the reagent is an acidic solution, formed of a mixture of HCI and H₂SO₄, and/or an alkaline solution, formed of a mixture of NaOH and KOH;
h) sending the waste brine (300) deprived of one or several trace elements to an electrodialysis with bipolar membranes unit (40);
i) submitting the waste brine (300) deprived of one or several trace elements to electrodialysis with said bipolar membranes, so as to convert a part of the sodium, potassium, and chloride ions and the water of the solution into hydrochloric acid (HCI), sulphuric acid (H₂SO₄), and sodium/potassium hydroxides (NaOH/KOH) in solution, thus obtaining acidic solutions (3a), alkaline solutions (3b), and a salt-concentrated waste brine (400);
j) diluting said salt-concentrated waste brine (400) for obtaining a diluted waste brine (500) and recycling it in the saltern (4a) or in the sea.
wherein the electrical energy (8) necessary for implementing operating steps b) thru j) of the procedure is generated starting from said waste brines (100, 200, 300, 400) jointly with and/or alternatively to the electrical energy produced by at least one renewable energy source (70),
wherein said procedure for extracting minerals from said bittern (100) is a closed cycle one, wherein the waste product (100, 200, 300) of each individual step of the procedure is re-used internally to the procedure itself,
and wherein the final waste product (400, 500) of the procedure is re-used in the saltern itself (4a) or in the sea.

2. The procedure for extracting minerals from said bittern (100), according to claim 1 **characterized in that** said production of electrical energy (8) from said salt concentrated waste brine (400) takes place and comprises the following further steps:
- sending the salt concentrated waste brine (400) to a reverse electrodialysis with ion-selective membranes unit (50);
- submitting said salt concentrated waste brine (400) to reverse electrodialysis with ion-selective membranes for producing electrical energy (8) and for producing a diluted waste brine (500);
- sending said diluted waste brine (500) to the sea or to the saltern (4a).

3. The procedure for extracting minerals from said bittern (100), according to claim 1 or 2 **characterized in that** said salt concentrated waste brine (400) used for producing electrical energy (8) has a salt concentration ranging from 40 g/l to 350 g/l.

4. The procedure for extracting minerals from said bittern (100) according to each one of the previous claims **characterized in that** in step g) said reagents jointly comprise carbon dioxide.

5. The procedure for extracting minerals from said bittern (100) according to claim 4 **characterized in that** said carbon dioxide (9) comes from industrial fumes, by carbonate precipitation.

6. The procedure for extracting minerals from said bittern (100) according to claim 4 **characterized in that** said carbon dioxide is a synthetic one.

7. The procedure for extracting minerals from said bittern (100) according to each one of the previous claims **characterized in that** steps e) and i) use at least one storage tank for storing said brines at the input (60a) and at least one storage tank for storing said brines at the output (60b), in order to store said magnesium-free brine (200) and said waste brine deprived of one or several trace elements (300) respectively, and implement said steps e) and i) respectively whenever there is availability of electrical energy (8a; 8b).

8. The procedure for extracting minerals from said bittern (100) according to each one of the previous claims **characterized in that** said minerals are comprised in a group formed of: magnesium hydroxide, carbonates, bicarbonates, or hydroxides/oxides of alkaline metals, carbonates, bicarbonates, or hydroxides/oxides of alkaline-earthy metals, carbonates, bicarbonates, or hydroxides/oxides of transition metals, carbonates, bicarbonates or hydroxides/oxides of post-transition metals.

9. The procedure for extracting minerals from said bittern (100) according to each one of the previous claims **characterized in that** said minerals are comprised in a group formed of lithium hydroxides or carbonates, cesium hydroxides or carbonates, strontium hydroxides or carbonates, rubidium hydroxides or carbonates, germanium hydroxides or carbonates, cobalt hydroxides or carbonates, and gallium hydroxides or carbonates.

10. The procedure for extracting minerals from said bittern (100) according to claim 9 **characterized in that** said minerals are lithium carbonates.

11. A plant (1) for extracting minerals from a waste brine (100) of saltern plants (4a), also called "bittern" (100), wherein said bittern comprises a quantity of sodium ions Na⁺ ranging from about 18 to about 78 g/l, a quantity of potassium ions K+ ranging from about 3 to about 17 g/l, a quantity of magnesium ions Mg²⁺ ranging from about 10 to about 60 g/l, a quantity of chlorine ions Cl⁻ ranging from about 178 to about 292 g/l, a quantity of sulphate ions SO₄⁻ ranging from about 43 to about 114 g/l, a concentration of calcium ions Ca²⁺ less than 1 g/l, a concentration in trace elements ranging from 10⁻⁶ to 1 g/l, and is substantially inorganic carbon free, a plant that uses the procedure according to claims from 1 to 10, and comprising the following components:
- at least one reactive crystallizer (10) for extracting magnesium hydroxide 5 from said bittern (100), wherein the reagent is an alkaline solution of alkaline hydroxides, such as, for instance, NaOH and KOH or mixtures thereof, in order to obtain a magnesium-free waste brine (200);
- at least one trace element separation unit (20) for separating at least one solution (2) rich in one or several trace elements from said magnesium-free waste brine (200) in order to obtain a waste brine (300) deprived of one or several trace elements, wherein the reagent is an acidic solution, consisting of a mixture of HCI and H₂SO₄, or an alkaline solution, consisting of a mixture of NaOH and KOH;
- at least one second reactive crystallizer (30) for extracting said trace elements from said at least one solution (2);
- at least one electrodialysis with bipolar membranes unit (40) for producing reagents from the waste brine (300) deprived of one or several trace elements for obtaining a salt-concentrated waste brine (400) and acidic solutions (3a), consisting of a mixture of HCI and H₂SO₄, and alkaline solutions (3b), consisting of a mixture of NaOH and KOH;
- at least one reverse electrodialysis unit (50) for producing electrical energy (8a);
- at least one low-salinity water stream 7;
- at least two storage tanks for storing the waste brines (100, 200, 300), of which at least one input tank (60a) and at least one output tank (60b) for intermittently implementing the energy consuming steps of the process;
- at least one electrical energy production unit for producing electrical energy from renewable sources (70);
- connection means to connect hydraulic pipes (80) for transferring waste products (100, 200, 300) from one component of the plant to another;
- hydraulic pump means (90) for pushing the waste brines (100, 200, 300) from one component of the plant to another, and/or for pushing the final waste brines (400, 500) into the sea or into the salterns plants (4a) of said bittern (100),
**characterized in that** said plant is a closed cycle one, i.e. the waste product (100; 200; 300) of each individual component of the plant is re-used in another component internally to the plant or in the component itself and the final waste products (400; 500) of the plant are re-used in the sea or in the saltern plant (4a) of said bittern, and **in that** the electrical energy supplied to the plant is produced by the salt concentrated waste brine (400) during the reverse electrodialysis step with ion-selective membranes and by the renewable energy sources (70), and the reagents (3a; 3b) used in at least a first reactive crystallizer (10) and a second reactive crystallizer (30) and in at least one trace elements separation unit (20), are produced starting from the waste brine (300) deprived of one or several trace elements.
